(19) Europäisches Patentamt
European Patent Office
Office européen des brevets

(11) **EP 1 043 639 B1**

(12) **EUROPÄISCHE PATENTSCHRIFT**

(45) Veröffentlichungstag und Bekanntmachung des Hinweises auf die Patenterteilung:
**22.03.2006  Patentblatt 2006/12**

(51) Int Cl.:
***G05B 19/042*** *(2006.01)*

(21) Anmeldenummer: **00107488.9**

(22) Anmeldetag: **06.04.2000**

(54) **Verfahren und Anordnung zum Entwurf eines technischen Systems**

Method and device for designing a technical system

Méthode et dispositif de conception d'un système technique

(84) Benannte Vertragsstaaten:
**DE FR GB**

(30) Priorität: **08.04.1999  DE 19915856**

(43) Veröffentlichungstag der Anmeldung:
**11.10.2000  Patentblatt 2000/41**

(73) Patentinhaber: **SIEMENS AKTIENGESELLSCHAFT 80333 München (DE)**

(72) Erfinder: **Moll, Christoph 81735 München (DE)**

(56) Entgegenhaltungen:
**US-A- 3 828 171**

**Beschreibung**

Die Erfindung betrifft ein Verfahren und eine Anordnung zum Entwurf eines technischen Systems.

Ein technisches System, insbesondere eine Anlage der Verfahrenstechnik, ist sowohl im Hinblick auf seinen Betrieb als auch den Entwurf charakterisiert durch ein komplexes Zusammenspiel seiner Teile (Komponenten).

Beispielsweise umfaßt eine Wasseranlage zur Wasserversorgung einer vorbestimmten Region zahlreiche (externe) Einflußfaktoren, deren Berücksichtigung für einen störungsfreien Betrieb, also eine kontinuierliche Wasserversorgung, wesentlich ist. Derartige Einflußfaktoren äußern sich bspw. in im Verlauf des Tages unterschiedlichem Strompreis und Verbrauch. Weiterhin sind Nebeneffekte wie außerplanmäßige Störungen oder Wartungen in dem Ablauf mitzuberücksichtigen.

Das Beispiel der Wasseranlage soll veranschaulichen, inwieweit ein technisches System sowohl in einer frühzeitigen Planungsphase als auch in einer späteren Steuerungsphase gewisse Bedingungen einhalten muß. Die an den Komponenten des technischen Systems vornehmbaren Einstellungen, die im Verlauf der Tages bzw. über das ganze Jahr variieren, ergeben über die Zeit einen Betriebsplan für die Wasseranlage.

Bekanntermaßen wird die Einstellung eines technischen Systems von einer hochspezialisierten Fachperson, im Falle der Wasseranlage von einem sogenannten "Dispatcher" (Wassermeister), vorgenommen, deren umfangreiches Wissen auf den Betrieb des technischen Systems wesentlich Einfluß nimmt. Dabei ist es von Nachteil, daß eine manuelle Einstellung generell - trotz noch so detaillierten Wissens - fehlerhaft sein kann bzw. im Vergleich zur automatisierten Einstellung stets langsamer ist.

Aus der US-Patentschrift US 3,828,171 ist ein Verfahren zur on-line Optimierung einer Erdöl-Crack-Anlage bekannt, bei dem ein lineares Modell des Crack-Prozesses mit momentanen Betriebsbedingungen versorgt und daraus optimale Steuerparameter für den Crack-Prozeß innerhalb vorgegebener Grenzen ermittelt werden.

Die **Aufgabe** der Erfindung besteht darin, einen automatisierten Entwurf eines technischen Systems zu ermöglichen.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zum Entwurf eines technischen Systems angegeben, bei dem das technische System anhand von Komponenten modelliert wird, deren jede einstellbar ist. Anhand einer Verbindung der Komponenten miteinander werden Bedingungen ermittelt, anhand derer ein Stoff-Fluß in dem technischen System beschrieben wird. Die Bedingungen werden in einem Gleichungssystem zusammengefaßt, das unter einer zusätzlichen Bedingung, nämlich daß eine Einstellung der Komponenten möglichst lange unverändert bleiben soll, gelöst wird. Die durch die Lösung des Gleichungssystems ermittelten Einstellungen der Komponenten werden zum Entwurf bzw. zur Steuerung des technischen Systems eingesetzt.

Insbesondere können zusätzliche Komponenten vorgesehen sein, deren keine einstellbar ist.

Eine Weiterbildung besteht darin, daß die Bedingungen zu diskreten Zeitpunkten ermittelt werden und die Einstellungen der Komponenten zu ebendiesen (diskreten) Zeitpunkten vorgenommen werden.

Es ist ein Vorteil der Erfindung, daß jede Einstellung automatisch vorgenommen werden kann und damit eine Reaktion auf eine veränderte Vorgabe im Vergleich zu einer manuellen Bedienung sehr viel schneller erfolgen kann. Insbesondere ist es von Vorteil, die Betrachtung der Bedingungen zu diskreten Zeitpunkten vorzunehmen, wodurch die diskreten Einstellungen der Komponenten in kontinuierlichen Variablen beschrieben werden können.

Eine andere Weiterbildung besteht darin, daß das Gleichungssystem unter Berücksichtigung vorgegebener Nebenbedingungen gelöst wird. Dazu können im Rahmen gesonderter Vorgaben die Möglichkeiten für Einstellungen mit Restriktionen beaufschlagt werden, die als obengenannte Nebenbedingungen bei der Lösung des Gleichungssystems implizit mitberücksichtigt werden. Dies eignet sich bevorzugt zur Berücksichtigung besonderer Ereignisse während des Betriebs der technischen Anlage. So kann beispielsweise ein Benutzer Wartungsarbeiten durch besondere Vorgabe dieser Nebenbedingungen vorbereiten bzw. berücksichtigen.

Insbesondere ist es eine Weiterbildung, daß ein Teil der physikalischen Größen des technischen Systems als Zustände der Komponenten modelliert wird. Dadurch kann durch implizierte Modellierung einer physikalischen Größe diese selbst ausgedrückt werden. Diese Form der Modellierung ist besonders vorteilhaft bei der Formulierung des Gleichungssystems. Weiterhin können verschiedenartige physikalische Größen auf diese Art erfaßt werden.

Im Rahmen einer zusätzlichen Weiterbildung wird das technische System als ein Graph modelliert, in dem Knoten und Kanten vorgesehen werden, wobei jede Kante mindestens zwei Knoten miteinander verbindet. Ferner kann eine Kontrolleinheit vorgesehen werden, die wiederum mindestens einen Knoten und mindestens eine Kante umfaßt. In Form einer anderen Weiterbildung kann der Knoten ein Speichervolumen und einen Zufluß bzw. einen Abfluß des Stoff-Flusses umfassen. Die Kante kann mindestens einen Zustand aufweisen. Weiterhin kann die Kontrolleinheit mindestens einen Zustand und mindestens eine Betriebsart umfassen. Eine andere Weiterbildung sieht vor, daß die Kontrolleinheit zusätzlich einen Teil (des technischen Systems) umfaßt, der mindestens einen Knoten und mindestens eine Kante aufweist. Ferner kann zwischen dem Knoten und einer mit ihm verbundenen Kante der Stoff-Fluß anliegen. Auch die Kante kann mit vorgegebenen Restriktionen belegt sein. Diese Restriktionen ergeben sich aus bestimmten Anforderungen an das technische System, die zumeist von dessen Benutzer formuliert werden und Vorbereitung oder Einleitung außerplanmäßiger Maßnahmen darstellen.

In einer anderen Weiterbildung kann der Stoff-Fluß entlang einer Kante durch eine Kennlinie bestimmt sein. Die der Kante zugrundeliegende physikalische Einheit wird modelliert durch besagte Kennlinie. Diese Kennlinie kann eine analytische Funktion, eine aus diskreten Größen gewonnene interpolierte Beschreibungsform oder eine statische Abbildung (Zuordnung) sein.

Das Gleichungssystem ist bevorzugt ein lineares Gleichungssystem, welches anhand standardmäßiger LP-Solver, gelöst wird.

Insbesondere kann der obengenannte Entwurf des technischen Systems einen Neuentwurf oder eine Anpassung eines bereits bestehenden Systems umfassen. Im ersten Fall wird im Rahmen der Modellierung das technische System neu entworfen und vorzugsweise nach Maßgabe dieses Entwurfs realisiert. Im zweiten Fall (Anpassung) wird insbesondere ein bereits bestehendes System derart "entworfen", daß die Steuerung bzw. der Betrieb dieses Systems entsprechend der Maßgabe des vorliegenden Verfahrens durchgeführt wird.

Eine Weiterbildung besteht darin, daß sich anhand der Lösung des Gleichungssystems ein Betriebsplan für den Betrieb des technischen Systems über die Zeit ergibt. Ein solcher Betriebsplan berücksichtigt alle obengenannten Bedingungen und zusätzliche Nebenbedingungen, wobei insbesondere die Anzahl der Schaltvorgänge (Veränderungen der Einstellungen der Komponenten) auf ein Minimum reduziert wird. Die Änderungen der Einstellungen zu reduzieren ist dabei ein generelles Bestreben, weil Schaltvorgänge Verschleiß und Energiekosten bedingen und somit generell teuer sind.

Eine andere Weiterbildung besteht darin, daß der Betriebsplan einer Wasseranlage ermittelt wird und insbesondere der Betriebsplan der Wasseranlage unter Berücksichtigung der während des Tagesverlaufs unterschiedlichen Stromkosten erstellt wird. Der über den Tag verteilte Stromtarif unterliegt häufig Schwankungen (Nachtstrom), die auszunützen im Rahmen einer optimierten Betriebsweise der Wasseranlage bzw. des technischen Systems generell erforderlich ist.

Auch wird zur Lösung der Aufgabe eine Anordnung zum Entwurf eines technischen Systems angegeben, das eine Prozessoreinheit aufweist, die derart eingerichtet ist, daß

a) bei dem das technische System mit einer Menge von untereinander verbundenen Komponenten modellierbar ist, deren jede Komponente einstellbar ist;

b) anhand einer Verbindung der Komponenten miteinander Bedingungen ermittelt werden, anhand derer ein Stoff-Fluß beschreibbar ist;

c) die Bedingungen in einem Gleichungssystem zusammengefaßt werden, das unter einer zusätzlichen Bedingung, nämlich daß eine Einstellung der Komponenten möglichst lange unverändert bleiben soll, gelöst wird;

d) durch die Lösung des Gleichungssystems ermittelte Einstellungen der Komponenten zum Entwurf des technischen Systems eingesetzt werden.

Diese Anordnung ist insbesondere geeignet zur Durchführung des erfindungsgemäßen Verfahrens oder einer seiner vorstehend erläuterten Weiterbildungen.

Ausführungsbeispiele der Erfindung werden nachfolgend anhand der Zeichnung dargestellt und erläutert.

Es zeigen

Fig.1    ein Flußdiagramm mit Schritten eines Verfahrens zum Entwurf eines technischen Systems;

Fig.2    ein Füllstandsverlauf in einem Behälter einer Wasseranlage über die Zeit;

Fig.3    einen Betriebsplan einer Pumpstation vor dem Entwurf des technischen Systems;

Fig.4    einen Betriebsplan einer Pumpstation nach dem Entwurf des technischen Systems;

Fig.5    ein Teilnetz einer Wasseranlage mit einer Kontrolleinheit S;

Fig.6    eine Übersicht von Modellierungsschritten des technischen Systems;

Fig.7    eine Prozessoreinheit;

Fig.8    ein Beispiel für eine Wasseranlage;

Fig.9    eine Zeitachse mit vorgegebenen diskreten Zeitpunkten und den Zeitpunkten zugeordneten Zeitintervallen.

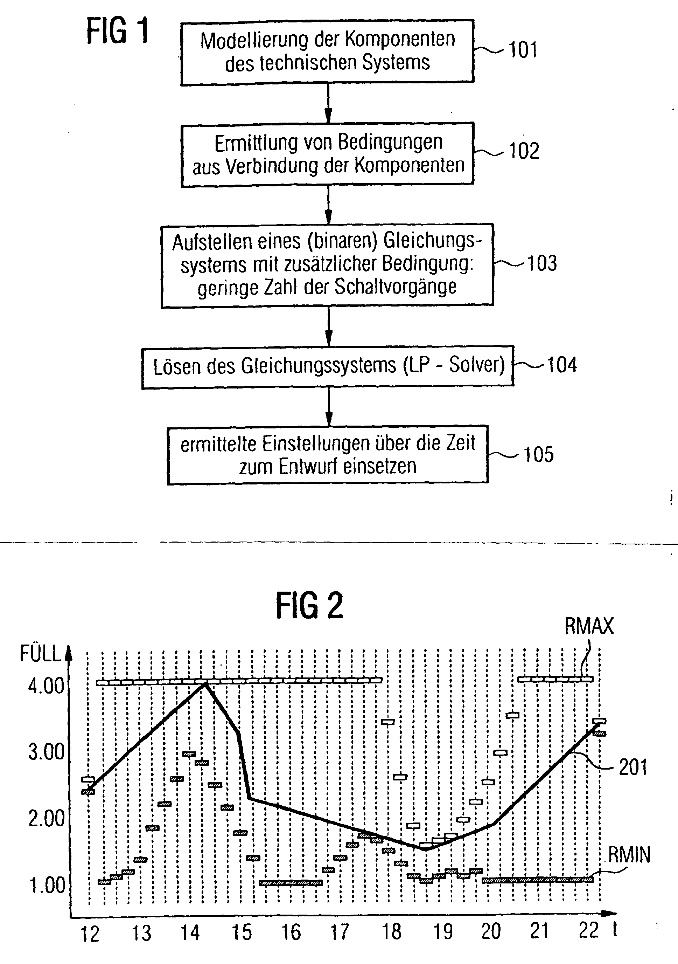

**Fig.1** zeigt ein Flußdiagramm mit Schritten eines Verfahrens zum Entwurf eines technischen Systems. In einem Schritt 101 werden Komponenten des technischen Systems modelliert. Entsprechend der Struktur der Komponenten werden in einem Schritt 102 Bedingungen ermittelt. Diese Bedingungen ergeben sich also aus der Art der Verbindung der einzelnen Komponenten miteinander. In einem Schritt 103 wird anhand dieser Bedingungen ein vorzugsweise lineares Gleichungssystem aufgestellt mit einer zusätzlichen Bedingung, nämlich daß eine Einstellung der Komponenten möglichst lange unverändert bleiben soll. Dadurch wird die Anzahl von Schaltvorgängen, die in der Regel kostenintensiv sind, minimiert. In einem Schritt 104 wird das Gleichungssystem gelöst. Dazu wird vorzugsweise ein allgemein verfügbares Programm, zum Beispiel ein LP-Solver zur Lösung eines linearen Gleichungssystems, eingesetzt. Die ermittelten Einstellungen werden zum Entwurf des technischen Systems eingesetzt.

Insbesondere folgt aus der Lösung des Gleichungssystems ohne die zusätzliche Bedingung eine Menge von optimalen Lösungen, deren jede die Schaltzeitpunkte (Veränderung der Einstellungen) zu verschiedenen Zeitpunkten enthält. Diejenige Lösung mit den geringsten Schaltvorgängen wird ermittelt, indem über die Zeit von einem vorgegebenen Startpunkt aus alle Lösungen aussortiert werden, solange es noch eine Lösung gibt, die einen späteren Zeitpunkt für den Schaltvorgang einer Komponente angibt. Diese Lösung wird ausgewählt und zu diesem nächsten Zeitpunkt der Einstellung verzweigt. Von dort aus wird wieder diejenige Lösung aus der Menge der Lösungen ermittelt, die den nächsten spätesten Schaltzeitpunkt aufweist. Auf diese Art werden alle optimalen Lösungen des Gleichungssystems nacheinander auf diejenige Lösung reduziert, die eine geringe Anzahl Schaltvorgänge aufweist.

Nachfolgend wird anhand des Beispiels "Wasseranlage" die Funktionsweise eines Verfahrens und einer Anordnung zum Entwurf eines technischen Systems veranschaulicht. Dabei ist die Wasseranlage nur beispielhaft ein Vertreter des technischen Systems.

**Fig.2** zeigt einen Füllstandsverlauf 201 in einem Behälter einer Wasseranlage über die Zeit t. Der Füllstand FÜLL ist an der Ordinate des Diagramms und die Zeit t ist an der Abszisse des Diagramms angetragen. Der Füllstandsverlauf 201 wird automatisch mit dem beschriebenen Verfahren ermittelt. Weiterhin sind Restriktionen RMAX und RMIN im Verlauf der Zeit t angebbar, die pro Zeiteinheit (zu bestimmten diskreten Zeit-punkten) als je eine maximale Restriktion RMAX und je eine minimale Restriktion RMIN bestimmbar sind. Der Nutzen maximaler Restriktionen RMAX und minimaler Restriktionen RMIN besteht darin, gewisse Beschränkungen bereits bei der Planung vorgeben zu können und somit den automatisch zu ermittelten Füllstandsverlauf 201 (Betriebsplan der Komponente, hier des Behälters) in bestimmten Bereichen zuzulassen bzw. auf bestimmte Bereiche einzuschränken. Dafür mögliche Anwendungen sind außerplanmäßige Wartungsarbeiten an dem Behälter.

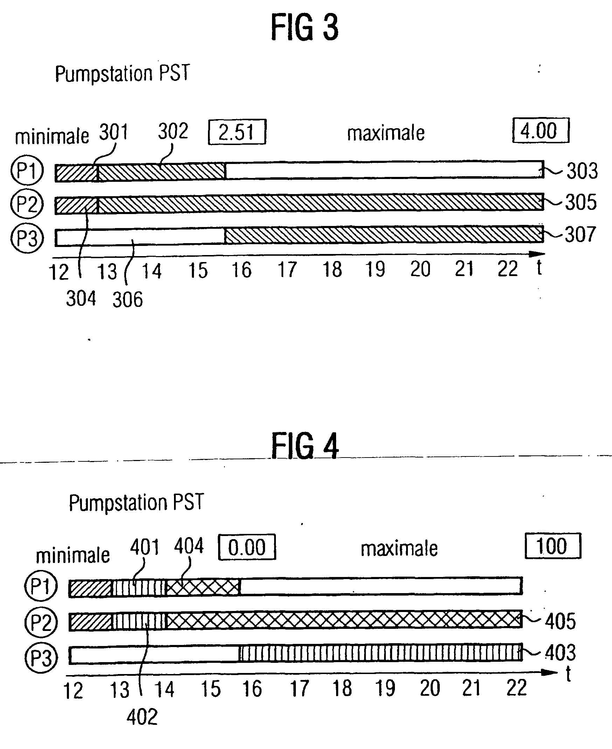

**Fig.3** zeigt einen Betriebsplan einer Pumpstation PST, die drei Pumpen P1, P2 und P3 umfaßt, über die Zeit t vor dem Entwurf des technischen Systems. Auch hier können bestimmte Restriktionen vorgegeben werden, die bei dem automatischen Entwurf des technischen Systems mitberücksichtigt werden. Für die Pumpe P1 wird in einem Zeitintervall 301 Aktivität vorgegeben, d.h. die Pumpe P1 arbeitet im Zeitintervall 301 mit vorbestimmter Förderleistung. Im Zeitintervall 302 wird für die Pumpe P1 keine Vorgabe gemacht, im Zeitintervall 303 soll die Pumpe P1 ausgeschaltet sein. Für die Pumpe P2 gilt im Zeitintervall 304 Aktivität mit vorgegebener Förderleistung, im Zeitintervall 305 erfolgt keine Vorgabe. Schließlich wird vorbestimmt, daß die Pumpe P3 im Zeitintervall 306 ausgeschaltet sein soll, während im Zeitintervall 307 keine Vorgabe gemacht wird.

**Fig.4** zeigt einen Betriebsplan der Pumpstation PSP nach dem Entwurf des technischen Systems. Gemäß den Vorgaben aus Fig.3 folgt nach dem Entwurf des technischen Systems der Betriebsplan für die einzelnen Pumpen P1, P2 und P3 wie in Fig.4 dargestellt. Die Zeitintervalle 301, 303, 304 und 306 bleiben unverändert, sie sind fest vorgegeben. Nach Durchführung des Verfahrens folgt, daß die Pumpe P1 in einem Intervall 401, die Pumpe P2 in einem Intervall 402 und die Pumpe P3 in einem Intervall 403 aktiv sind, d.h. mit einer vorgegebenen Förderleistung arbeiten. In den Intervallen 404 und 405 sind Pumpe P1 bzw. Pumpe P2 inaktiv.

Durch die Restriktionen (vgl. Fig.3) werden bestimmte Vorgaben bei dem Ablauf des Verfahrens zum Entwurf des technischen Systems berücksichtigt. Sollte sich aus den gemachten Restriktionen keine Lösung wie in Fig.4 ergeben, so wird dies gesondert vermerkt bzw. dem Benutzer angezeigt zusammen mit sich widersprechenden Restriktionen.

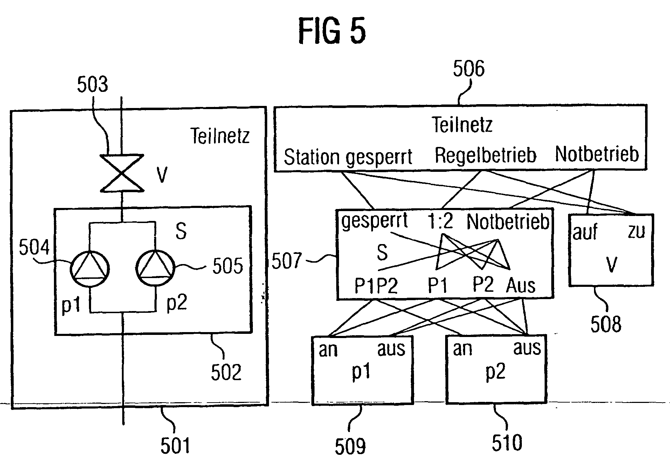

**Fig.5** zeigt ein Teilnetz 501 einer Wasseranlage mit einer Kontrolleinheit 502 und einem Ventil 503. Die Kontrolleinheit 502 umfaßt zwei Pumpen 504 und 505. Das Teilnetz 501 wird in Form der Blöcke 506, 507, 508, 509 und 510 modelliert. Die Kontrolleinheit 502 umfaßt die Betriebsmodi "1:2", "Notbetrieb" und "gesperrt". Die Zustände der Komponente Kontrolleinheit sind "P1", "P2", "P1P2", "aus".

Die Kontrolleinheit 502, insbesondere deren Betriebsmodi und Zustände sind in Block 507 dargestellt. Die weitere Komponente, das Ventil 503, wird in dem Block 508 modelliert. Das Ventil 503 hat zwei mögliche Zustände "auf" und "zu". Verbindungslinien innerhalb der Komponente Kontrolleinheit 502, dargestellt in Block 507, beschreiben in den jeweiligen Betriebsmodi mögliche Zustände:

Im Betriebsmodus "1:2" können die Zustände "P1", "P2" oder "aus" belegt werden. Im Betriebsmodus "gesperrt" kann nur der Zustand "aus" angenommen werden. Verbindungen zwischen Komponenten kennzeichnen den Betriebsmodus der Teilkomponente in dem Zustand der Oberkomponente:

Im Zustand "P1" der Kontrolleinheit ist die Pumpe P1 im Betriebsmodus "an" und die Pumpe P2 im Betriebsmodus "aus".

Der Block 506 zeigt Betriebsmodi des Teilnetzes, d.h."Station gesperrt", "Regelbetrieb" und "Notbetrieb".

Die beiden Pumpen (Komponenten) P1 504 und P2 505 werden als Blöcke 509 und 510 modelliert, wobei jede Pumpe entweder "an" oder "aus" ist (Zustände der Pumpe). Die hierarchische Struktur der Modellierung, also die Blöcke 506 bis 510 mit ihren entsprechenden Bezeichnungen und Verbindungen, strukturieren das zugrundeliegende physikalische Modell des Teilnetzes 501. Aus der Modellbildung werden Gleichungen gewonnen, die zusammen ein lineares Gleichungssystem ergeben, das von einem allgemein verfügbaren Lösungswerkzeug für lineare Gleichungssysteme (LP-Solver) gelöst wird.

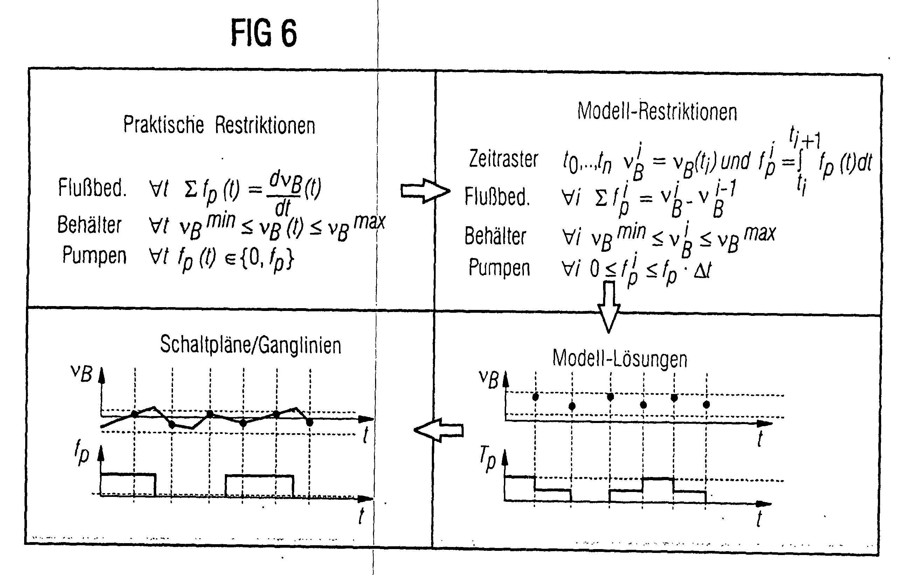

In **Fig.6** ist eine Übersicht von Modellierungsschritten des technischen Systems dargestellt. Bei der Modellierung werden alle relevanten Flußbedingungen (Bedingungen für den Stoff-Fluß) sowie Zustandsvorgaben an Pumpen oder Pumpstationen sowie Behälterganglinienbegrenzungen abgebildet. Diese Abbildungen werden in einem Gleichungssystem zusammengefaßt, dessen Lösung Zeitdauern in den einzelnen Komponenten für deren jeweiligen Zustand einschließlich der Fördermengen darstellen. Um die Anzahl der Schaltvorgänge in den Komponenten zu reduzieren werden iterativ Fördermengen und Zustände für die einzelnen Zeitintervalle festgelegt. Als Ergebnis ergibt sich ein kostenopimaler Betriebsplan mit einer geringen Anzahl von Schaltvorgängen.

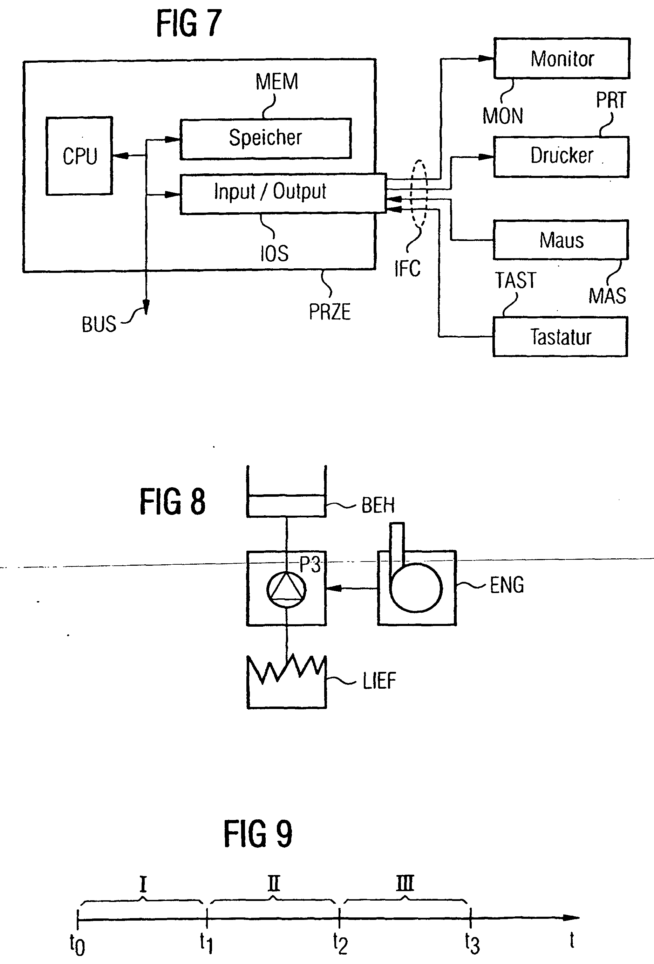

In **Fig.7** ist eine Prozessoreinheit PRZE dargestellt. Die Prozessoreinheit PRZE umfaßt einen Prozessor CPU, einen Speicher SPE und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

In **Fig.8** ist ein Beispiel für eine Wasseranlage dargestellt. Die Wasseranlage umfaßt einen Behälter BEH, eine Pumpe P3, eine Energiequelle ENG und einen Wasserlieferanten LIF. Der Wasserlieferant LIF liefert an die Pumpe P3 eine vorgebbare Wassermenge, die in den Behälter BEH gepumpt wird. Die zum Pumpen notwendige Energie wird von der Energiequelle ENG an die Pumpe P3 geliefert.

Im vorliegenden Beispiel werden zu mehreren diskreten Zeitpunkten t0, t1 und t2 bestimmte Vorgaben gemacht, die automatisch zu einem Gleichungssystem zusammengesetzt werden, dessen Lösung, insbesondere unter der Nebenbedingung, daß die Schaltvorgänge in den einzelnen Komponenten, hier der Pumpe P3 zu minimieren sind, einen optimierten Betriebsplan ergeben. Die Zeitachse mit den Zeitpunkten t0 bis t3 und den zugehörigen Intervallen I bis III ist in **Fig.9** dargestellt.

Für den Behälter gelten folgende Vorgaben:

Füllstand B des Behälters BEH zum Zeitpunkt t:

$$B(t = 0) = 100$$

$$100 \leq B(t = 1) \leq 200$$

$$B(t = 2) = 100$$

Der Verbrauch V(i) im Zeitintervall i:

V(I) = 100 (Verbrauch im Zeitintervall I)
V(II) = 100 (Verbrauch im Zeitintervall II)

Die Pumpe (Zustände "an", "aus") weist im Zeitintervall I einen Fluß $f_I$ und im Zeitintervall II einen Fluß $f_{II}$ auf.

Variablen sind die Schaltzeitpunkte

$$t_I^{an},\ t_{II}^{an},\ t_I^{aus},\ t_{II}^{aus}$$

der Pumpe P1. Der Wasserlieferant LIF speist im Zeitintervall I die Menge E(I) und im Zeitintervall II die Menge E(II) ein.

Die Flußbedingungen werden formuliert zu

$$B(0) + f_I - V(I) = B(1),$$

$$E(I) = f_I,$$

$$B(1) + f_{II} - V(II) = B(2),$$

$$E(II) = f_{II}.$$

Die Flußkopplungen sind ausgedrückt durch

$$f_I = t_I^{an} \cdot FL,$$

$$f_{II} = t_{II}^{an} \cdot FL,$$

wobei FL die Förderleistung bezeichnet. Die Gesamtkosten werden formuliert zu

$$\sum_{\text{Zeitintervalle}} \quad \sum_{\text{Pumpen}} \text{Energie}(t, f)$$

bzw. als

$$c_I \cdot f_I + c_{II} \cdot f_{II},$$

wobei $c_i$ eine Konstante aus Strompreis, Leistung und Fluß darstellt.

**Patentansprüche**

1. Verfahren zum automatischen Entwurf eines technischen Systems,

a) bei dem das technische System mit einer Menge von untereinander verbundenen Komponenten auf einer Datenverabeitungseinrichtung modelliert wird, wobei deren Komponenten jede einstellbar ist;
b) bei dem anhand einer Verbindung der Komponenten miteinander mit Hilfe Datenverrarbeitungseinrichtung Bedingungen ermittelt werden, anhand derer ein Stoff-Fluß beschrieben wird;
c) bei dem die Bedingungen mit Hilfe der Datenverarbewitungseinrichtung in einem Gleichungssystem zusammengefaßt werden, das unter einer zusätzlichen Bedingung, nämlich daß eine Einstellung der Komponenten möglichst lange unverändert bleiben soll, durch die Datenverarbeitungseinrichtung gelöst wird;

d) bei dem durch die Lösung des Gleichungssystems ermittelte Einstellungen der Komponenten von der Datenverarbeitungseinrichtung zum Entwurf des technischen Systems eingesetzt werden.

**2.** Verfahren nach Anspruch 1,
bei dem zusätzlich Komponenten vorhanden sind, deren keine einstellbar ist.

**3.** Verfahren nach Anspruch 1 oder 2,
bei dem die Bedingungen zu diskreten Zeitpunkten ermittelt werden und die Einstellungen der Komponenten zu ebendiesen Zeitpunkten vorgenommen wird.

**4.** Verfahren nach einem der vorhergehenden Ansprüche,
bei dem das Gleichungssystem unter Berücksichtigung vorgegebener Nebenbedingungen gelöst wird.

**5.** Verfahren nach Anspruch 4,
bei dem die Nebenbedingungen vorgegebene Restriktionen der Einstellungen der Komponenten sind.

**6.** Verfahren nach einem der vorhergehenden Ansprüche,
bei dem ein Teil der physikalischen Größen des technischen Systems durch Zustände der Komponenten modelliert wird.

**7.** Verfahren nach einem der vorhergehenden Ansprüche,
bei dem das technische System modelliert wird, indem Knoten und Kanten, wobei jede Kante mindestens zwei Knoten miteinander verbindet, vorgesehen werden.

**8.** Verfahren nach Anspruch 7,
bei dem eine Kontrolleinheit vorgesehen ist, die wiederum mindestens einen Knoten und mindestens eine Kante umfaßt.

**9.** Verfahren nach Anspruch 7 oder 8,
bei dem der Knoten ein Speichervolumen und einen Zufluß bzw. einen Abfluß des Stoff-Flusses umfaßt.

**10.** Verfahren nach einem der Ansprüche 7 bis 9,
bei dem die Kante mindestens einen Zustand aufweist.

**11.** Verfahren nach einem der Ansprüche 7 bis 10,
bei dem die Kontrolleinheit mindestens einen Zustand und mindestens eine Betriebsart umfaßt.

**12.** Verfahren nach Anspruch 11,
bei dem die Kontrolleinheit einen Teil umfaßt, der mindestens einen Knoten und mindestens eine Kante umfaßt.

**13.** Verfahren nach einem der Ansprüche 7 bis 12,
bei dem zwischen dem Knoten und einer mit ihm verbundenen Kante ein Stoff-Fluß anliegt.

**14.** Verfahren nach einem der Ansprüche 7 bis 13,
bei dem die Kante mit vorgegebenen Restriktionen belegt wird.

**15.** Verfahren nach einem der Ansprüche 7 bis 14,
bei dem der Stoff-Fluß entlang einer Kante durch eine Kennlinie bestimmt ist.

**16.** Verfahren nach einem der vorhergehenden Ansprüche,
bei dem das Gleichungssystem ein lineares Gleichungssystem ist.

**17.** Verfahren nach einem der vorhergehenden Ansprüche,
bei dem der Entwurf des technischen Systems einen Neuentwurf oder eine Anpassung eines bereits bestehenden Systems umfaßt.

**18.** Verfahren nach einem der vorhergehenden Ansprüche,
bei dem ein reales technisches System entsprechend dem Entwurf gesteuert oder realisiert wird.

**19.** Verfahren nach einem der vorhergehenden Ansprüche,
bei dem die Lösung des Gleichungssystems einen Betriebsplan für den Betrieb des technischen Systems über die Zeit ergibt.

**20.** Verfahren nach Anspruch 19,
bei dem der Betriebsplan einer Wasseranlage ermittelt wird.

**21.** Verfahren nach Anspruch 19 oder 20,
bei dem der Betriebsplan unter Berücksichtigung im Tagesverlauf unterschiedlicher Stromkosten erstellt wird.

**22.** Anordnung zum automatischen Entwurf eines technischen Systems, bei dem

a) Mittel zur Modellierung des technischen Systems derart vorhanden sind, dass das technische System mit einer Menge von untereinander verbundenen Komponenten modellierbar ist, deren jede Komponente einstellbar ist;
b) Mittel zur Beschreibung eines Stoff-Flusses derart vorhanden sind, dass anhand einer Verbindung der Komponenten miteinander Bedingungen ermittelt werden, anhand derer der Stoff-Fluß des technischen Systems beschreibbar ist;
c) Mittel zur Zusammenfassung der Bedingungen in Gleichungssystem und zur Lösung desselben, derart vorhanden sind, dass die Bedingungen in einem Gleichungssystem zusammengefasst werden, das unter einer zusätzlichen Bedingung, nämlich daß eine Einstellung der Komponenten möglichst lange unverändert bleiben soll, gelöst wird;
d) Mittel zum Entwurf des technischen Systems derart vorhanden sind, dass die durch die Lösung des Gleichungssystems ermittelten Einstellungen als Parameter für den automatischen Entwurf eingesetzt werden.

**Claims**

**1.** Method for the automated design of a technical system,

a) in which the technical system is modelled on data processing equipment with a set of components which are interconnected with each other, with each of its components being adjustable;
b) in which, by reference to an interconnection of the components with each other, data processing equipment is used to determine conditions by reference to which a material flow is specified;
c) in which the conditions are summarised with the help of the data processing equipment in a system of equations which is solved by the data processing equipment under an additional condition, namely that any setting of the components should remain unchanged for as long as possible;
d) whereby settings of the components determined by the solution of the system of equations by the data processing equipment is used for the purpose of designing the technical system.

**2.** Method in accordance with claim 1,
in which additional components are present, none of which is adjustable.

**3.** Method in accordance with claim 1 or 2,
in which the conditions are determined at discrete points in time, and the adjustment of the components is undertaken at these same time points.

**4.** Method in accordance with one of the preceding claims,
in which the system of equations is solved taking into account prescribed secondary conditions.

**5.** Method in accordance with claim 4,
in which the secondary conditions are prescribed restrictions on the settings of the components.

**6.** Method in accordance with one of the preceding claims,
in which a portion of the physical quantities of the technical system are modelled by states of the components.

7. Method in accordance with one of the preceding claims,
in which the technical system is modelled by the provision of nodes and edges, with each edge linking together at least two nodes.

8. Method in accordance with claim 7,
in which a control unit is provided which in turn incorporates at least one node and at least one edge.

9. Method in accordance with claim 7 or 8,
in which the node incorporates a storage volume and an inflow or an outflow, as applicable, for the material flow.

10. Method in accordance with one of the claims 7 to 9,
in which the edge has at least one state.

11. Method in accordance with one of the claims 7 to 10,
in which the control unit has at least one state and at least one operating mode.

12. Method in accordance with claim 11,
in which the control unit incorporates a part which has at least one node and at least one edge.

13. Method in accordance with one of the claims 7 to 12,
in which there is a material flow between the node and an edge which is connected to it.

14. Method in accordance with one of the claims 7 to 13,
in which prescribed restrictions apply for the edge.

15. Method in accordance with one of the claims 7 to 14,
in which the material flow along an edge is determined by a characteristic curve.

16. Method in accordance with one of the preceding claims,
in which the system of equations is a system of linear equations.

17. Method in accordance with one of the preceding claims,
in which the design of the technical system is a new design or a modification of a system which already exists.

18. Method in accordance with one of the preceding claims, whereby a real-world technical system is controlled or realised in accordance with the design.

19. Method in accordance with one of the preceding claims, whereby the solution to the system of equations gives an operating plan for the operation of the technical system over time.

20. Method in accordance with claim 19,
by which the operating plan for a water plant is determined.

21. Method in accordance with claim 19 or 20,
by which the operating plan is generated taking into account the electric power costs which vary over the course of a day.

22. Arrangement for the automated design of a technical system, in which

> a) facilities are available for the modelling of the technical system, which are such that the technical system can be modelled with a set of components which are interconnected with each other, each of the components being adjustable;
> b) facilities are provided for specifying a material flow, which are such that conditions are determined by reference to an interconnection of the components with each other, by reference to which the material flow in the technical system can be described;
> c) facilities are available for summarising the conditions in a system of equations and for solving these equations, which are such that the conditions are summarised in a system of equations which is solved under an additional condition, namely that any setting of the components should remain unchanged for as long as possible;

d) facilities are available for designing the technical system which are such that the settings determined by the solution of the system of equations are used as parameters for the automated design process.

**Revendications**

1. Procédé de conception automatique d'un système technique,

   a) dans lequel le système technique est modelé sur un dispositif de traitement de données au moyen d'une quantité de composants raccordés entre eux, chacun des composants du dispositif de traitement de données étant réglable ;
   b) dans lequel des conditions sont déterminées à l'aide d'une liaison entre les composants au moyen du dispositif de traitement de données, à l'aide desquelles un flux de matière est décrit ;
   c) dans lequel les conditions sont regroupées en un système d'équations à l'aide du dispositif de traitement de données, ce système d'équations étant résolu au moyen du dispositif de traitement de données sous une condition supplémentaire, à savoir qu'un réglage des composants doit rester inchangé le plus longtemps possible ;
   d) dans lequel les réglages des composants, déterminés au moyen de la résolution du système d'équations, sont utilisés par le dispositif de traitement de données pour concevoir le système technique.

2. Procédé selon la revendication 1,
   dans lequel des composants supplémentaires sont présents, dont aucun n'est réglable.

3. Procédé selon la revendication 1 ou 2,
   dans lequel les conditions sont déterminées à des moments discrets et les réglages des composants sont exécutés à ces mêmes moments.

4. Procédé selon l'une quelconque des revendications précédentes,
   dans lequel le système d'équations est résolu en tenant compte de conditions auxiliaires prédéfinies.

5. Procédé selon la revendication 4,
   dans lequel les conditions auxiliaires sont des restrictions prédéfinies des réglages des composants.

6. Procédé selon l'une quelconque des revendications précédentes,
   dans lequel une partie des grandeurs physiques du système technique est modelée par des états des composants.

7. Procédé selon l'une quelconque des revendications précédentes,
   dans lequel le système technique est modelé du fait que des noeuds et des arêtes sont prévus, chaque arête raccordant au moins deux noeuds.

8. Procédé selon la revendication 7,
   dans lequel une unité de contrôle est prévue, qui comprend à son tour au moins un noeud et au moins une arête.

9. Procédé selon la revendication 7 ou 8,
   dans lequel le noeud comprend un volume de stockage et une arrivée resp. une évacuation du flux de matière.

10. Procédé selon l'une quelconque des revendications 7 à 9,
    dans lequel l'arête présente au moins un état.

11. Procédé selon l'une quelconque des revendications 7 à 10,
    dans lequel l'unité de contrôle comprend au moins un état et au moins un mode de fonctionnement.

12. Procédé selon la revendication 11,
    dans lequel l'unité de contrôle comprend une partie comprenant un noeud et au moins un arête.

13. Procédé selon l'une quelconque des revendications 7 à 12,
    dans lequel un flux de matière est présent entre le noeud et une arête raccordée au noeud.

**14.** Procédé selon l'une quelconque des revendications 7 à 13,
dans lequel l'arête est affectée de restrictions prédéfinies.

**15.** Procédé selon l'une quelconque des revendications 7 à 14,
dans lequel le flux de matière est déterminé le long d'une arête au moyen d'une courbe caractéristique.

**16.** Procédé selon l'une quelconque des revendications précédentes, dans lequel le système d'équations est un système d'équations linéaires.

**17.** Procédé selon l'une quelconque des revendications précédentes,dans lequel la conception du système technique comprend une nouvelle conception ou une adaptation d'un système déjà existant.

**18.** Procédé selon l'une quelconque des revendications précédentes, dans lequel un système technique réel est commandé ou réalisé selon la conception.

**19.** Procédé selon l'une quelconque des revendications précédentes, dans lequel la résolution du système d'équations résulte en un plan de fonctionnement pour le fonctionnement du système technique dans le temps.

**20.** Procédé selon la revendication 19,
dans lequel le plan de fonctionnement d'une station d'eau est déterminé.

**21.** Procédé selon la revendication 19 ou 20,
dans lequel le plan de fonctionnement est établi en tenant compte de différents frais de courant en cours de journée.

**22.** Dispositif pour la conception automatique d'un système technique, dans lequel

a) des moyens sont présents pour la modélisation du système technique, de telle manière que le système technique est modelable au moyen d'une quantité de composants raccordés entre eux, dont chacun est réglable ;
b) des moyens sont présents pour la description d'un flux de matière, de telle manière que des conditions sont déterminées à l'aide d'une liaison entre les composants, au moyen desquelles le flux de matière du système technique est descriptible ;
c) des moyens pour regrouper les conditions dans le système d'équations et pour résoudre celui-ci sont présents, de telle manière que les conditions sont regroupées dans un système d'équations qui est résolu sous une condition supplémentaire, à savoir qu'un réglage des composants doit rester inchangé le plus longtemps possible ;
d) des moyens pour concevoir le système technique sont présents, de telle manière que les réglages déterminés par la résolution du système d'équations sont utilisés comme paramètres pour la conception automatique.

# FIG 1

Modellierung der Komponenten
des technischen Systems ⟶ 101

Ermittlung von Bedingungen
aus Verbindung der Komponenten ⟶ 102

Aufstellen eines (binären) Gleichungssystems mit zusätzlicher Bedingung:
geringe Zahl der Schaltvorgänge ⟶ 103

Lösen des Gleichungssystems (LP - Solver) ⟶ 104

ermittelte Einstellungen über die Zeit
zum Entwurf einsetzen ⟶ 105

# FIG 2

# FIG 3

Pumpstation PST

minimale  301    302    [2.51]         maximale              [4.00]

(P1)  303
(P2)  305
(P3)  307

12   13   14   15   16   17   18   19   20   21   22   t

304   306

# FIG 4

Pumpstation PST

minimale  401  404   [0.00]          maximale              [100]

(P1)
(P2)  405
(P3)  403

12   13   14   15   16   17   18   19   20   21   22   t

402

# FIG 5

# FIG 6

Praktische Restriktionen

Flußbed.  $\forall t \ \Sigma f_p(t) = \dfrac{dv_B(t)}{dt}$

Behälter  $\forall t \ v_B{}^{min} \leq v_B(t) \leq v_B{}^{max}$

Pumpen  $\forall t \ f_p(t) \in \{0, f_p\}$

Modell-Restriktionen

Zeitraster  $t_0,...,t_n \ v_B^i = v_B(t_i) \ und \ f_p^i = \int_{t_i}^{t_{i+1}} f_p(t)dt$

Flußbed.  $\forall i \ \Sigma f_p^i = v_B^i - v_B^{i-1}$

Behälter  $\forall i \ v_B{}^{min} \leq v_B^i \leq v_B{}^{max}$

Pumpen  $\forall i \ 0 \leq f_p^i \leq f_p \cdot \Delta t$

Schaltpläne/Ganglinien

Modell-Lösungen

EP 1 043 639 B1

## FIG 7

## FIG 8

## FIG 9